# EUROPEAN PATENT APPLICATION

(11) **EP 0 735 120 A2**
(43) Date of publication of application: **02.10.1996**
(21) Application number: 96301332.1
(22) Date of filing: 27.02.1996
(51) Int. Cl.: C09D 11/00

(54) **A jet ink composition**

(30) Priority: 28.03.1995 US 411908; 17.01.1996 US 588040
(71) Applicant: VIDEOJET SYSTEMS INTERNATIONAL, INC., Wood Dale, Illinois 60191-1073 (US)
(72) Inventor: Siddiqui, Mohammed W., Carol Stream, Illinois (US)
(74) Representative: McGowan, Nigel George

(57) **Abstract**

Disclosed are jet ink compositions comprising water, a water soluble or dispersible polymeric resin, a colorant having infrared absorption in the range of 700 - 1100 nm, an alkylene glycol having 3-6 carbon atoms, and at least one mono- or di-alkyl ether of an alkylene glycol having 2-6 carbon atoms wherein the alkyl group consists of 1-6 carbon atoms, the jet ink compositions having a surface tension of less than 35 dynes/cm. An improved method of jet printing is also disclosed, the improvement comprising using the inventive ink composition.

## Description

The present invention relates to ink jet printing ink compositions that are suitable for printing on substrates including porous substrates such as paper, and non-porous substrates such as glass, plastic, and metal, and particularly to those compositions that are suitable for printing messages which are bar code readable.

Ink jet printing is a well-known technique by which printing is accomplished without contact between the printing device and the substrate on which the printed characters are deposited. Briefly described, ink jet printing involves the technique of projecting a stream of ink droplets to a surface and controlling the direction of the stream electronically so that the droplets are caused to form the desired printed image on that surface. This technique of noncontact printing is well suited for application of characters onto a variety of surfaces including porous and non-porous surfaces.

Reviews of various aspects of ink jet printing can be found these publications: Kuhn et al., *Scientific American,* April, 1979, 162-178; and Keeling, *Phys. Technol.,* 12(5), 196-303 (1981). Various ink jet apparatuses are described in the following U.S. patents: 3,060,429, 3,298,030, 3,373,437, 3,416,153, and 3,673,601.

In general, an ink jet composition must meet certain rigid requirements to be useful in ink jet printing operations. These relate to viscosity, resistivity, solubility, compatibility of components and wettability of the substrate. Further, the ink must be quick-drying and smear resistant, must be capable of passing through the ink jet nozzle without clogging, and must permit rapid cleanup of the machine components with minimum effort.

In addition, in the preparation of multiple copies of thermally imageable duplicating masters, it is necessary that the image printed on the substrate which is imaged by heat, such as Themofax paper, Azofax paper, Transofax masters, thermal stencils, and the like, be capable of absorbing at least 50% infrared radiation in the range of about 700 to 1100 nm, and re-emit radiation in longer wavelengths in the form of heat in order to image the duplicating master.

Moreover, for some applications, it is desirable that the printed image be capable of detection by infrared scanning devices. Thus, in bar code interpretations, the printed image is exposed to infrared radiation in the range of 700 nm to 1100 nm whereby image should be such that the reflectance of the image (50% or less), as compared to background reflectance, is capable of detection by such infrared detectors.

Several jet ink compositions have been disclosed in the patent literature. For example, UK Patent Application GB 2 105 735 discloses a jet ink composition comprising an oil soluble dye-impregnated polyurethane latex dispersed in an aqueous medium.

U.S. Patent 4,680,332 discloses a jet ink composition comprising a water insoluble polymer such as a polyacrylate dispersed in a liquid medium, the polymer containing therein an oil soluble dye, and a nonionic stabilizer permanently attached thereto.

U.S. Patent 5,207,825 discloses a jet ink composition which comprises an aqueous liquid vehicle, a colorant, and a polymeric additive which is a substituted bisphenol A derivative.

U.S. Patent 5,080,716 discloses a jet ink composition comprising a recording agent, a liquid medium capable of dissolving or dispersing the recording agent, and a substituted benzene or toluene sulfonamide compound.

U.S. Patent 5,254,158 discloses an ink composition which comprises an aqueous liquid vehicle, a colorant, and an additive selected from the group consisting of amine alkoxylates, sorbitan monoester alkoxylates, alkylene oxide adducts of glycerin, and mixtures thereof.

U.S. Patents 5,215,577 and 5,178,671 disclose jet ink compositions comprising a recording agent and a liquid medium for dissolution or dispersion thereof, the recording agent being an aromatic sulfonated diazo compound.

U.S. Patent 5,131,949 discloses a jet ink composition including a recording agent, a liquid medium capable of dissolving or dispersing the recording agent, and a compound having an amide group.

U.S. Patent 5,213,613 discloses a jet ink comprising a recording agent and a liquid medium capable of dissolving or dispersing the recording agent therein, wherein the ink contains and imide compound and at least one compound selected from the group consisting of urea, thiourea and derivatives thereof, and volatile alkaline compounds.

U.S. Patent 4,692,188 discloses a process for the preparation of jet ink compositions, comprising (1) dissolving in a water-immiscible organic solvent a polymer composition and an organic oil soluble dye; (2) adding an aqueous phase water surfactant mixture thereto; (3) affecting emulsification thereof; and (4) subsequently evaporating from the aforementioned mixture the solvent thereby resulting in an ink with the dye trapped in the polymer particles suspended in the aqueous phase. The polymer compositions include polycarbonates, polystyrene, polymethacrylates and copolymers thereof.

U.S. Patent 5,316,575, having the same assignee as the present application, discloses an ink composition suitable for ink jet printing, comprising an aqueous resin solution and an organic pigment, wherein said ink composition is substantially free of volatile organic compounds.

U.S. Patent 3,705,043 discloses a jet ink composition having high infrared absorptivity comprising a high infrared absorbing coloring component and a humectant in the form of an aliphatic polyol, alkyl ether derivatives of aliphatic polyols and mixtures thereof in aqueous medium.

U.S. Patent 3,687,887 discloses a jet ink composition suitable for titling of film or photographic negatives, which is an aqueous system containing a dissolved styrene-maleic anhydride or polyvinyl acetate resin, glycol ethers, carbon black, and certain other additives. The surface tension of the ink composition is broadly reported to be 35-40 dynes/cm. However, the working examples produced compositions that had the lowest surface tension of about 36 dynes/cm, as discussed in greater detail later.

Previously known jet inks have certain drawbacks such as the use of harmful organic solvents, long drying times, relatively high surface tension, and poor print quality. Thus, there is a need for aqueous jet ink compositions for printing messages readable by a bar code reader, which compositions having high infrared absorption, reduced drying time, improved print quality, improved safety, and improved adhesion to substrates.

The present invention provides an aqueous jet ink composition having high infrared absorption, improved penetration and adhesion, reduced drying time, improved print quality, reduced reject rate, increased line speed, and improved safety.

The ink composition of the present invention comprises water, a polymeric resin, a colorant having high infrared absorption, a glycol as a humectant, and a glycol ether as a penetrant. Additional ingredients such as organic solvents, biocides, and surfactants can be present in the jet ink composition in order to improve the solubility or dispersibility of the resin and the colorant, and to improve the shelf life. The ink composition has a relatively low surface tension.

The present invention also provides a method of forming printed images on porous and non-porous surfaces using the ink composition of the present invention. In accordance with the invention, the method comprises projecting a stream of droplets of the ink composition onto a surface and controlling the direction of the stream electronically so that the ink droplets form the desired printed image on the surface.

The present invention provides a jet ink composition comprising water, a water soluble or dispersible polymeric resin, a colorant having infrared absorption in the range of 700 - 1100 nm, an alkylene glycol having 3-6 carbon atoms, and at least one mono- or di-alkyl ether of an alkylene glycol having 2-6 carbon atoms wherein the alkyl group consists of 1-6 carbon atoms.

The ink composition of the present invention comprises water, a polymeric resin, a colorant having high infrared absorption, a glycol as a humectant, and a glycol ether as a penetrant. Additional ingredients such as organic solvents, biocides, and surfactants can be present in the jet ink composition in order to improve the solubility or dispersibility of the resin and the colorant, and to improve the shelf life.

In general, the ink compositions of the present invention exhibit the following characteristics for use in ink jet printing systems: (1) a viscosity from about 1.6 to about 7.0 centipoises at 25° C; (2) an electrical resistivity from about 50 to about 2000 ohm-cm; and (3) a sonic velocity from about 1200 to about 1300 meters/second; and (4) include a colorant having infrared absorptivity of at least 50% in the range of 700 nm to 1100 nm.

It is preferred that the surface tension of the ink composition of the present invention is below 35 dynes/cm, and it is further preferred that the surface tension of the ink composition of the present invention is in the range of from about 24 dynes/cm to about 34 dynes/cm. It is believed that the relatively low surface tension of the ink composition allows rapid drying, particularly on porous substrates such as paper.

A detailed discussion of the ingredients and the characteristics of the inventive ink composition is set forth below.

### INK CARRIER

Water is used as the carrier for the aqueous jet ink composition of the present invention. Typically water is present in an amount of from about 40 percent weight to about 80 percent by weight, preferably from about 50 percent by weight to about 70 percent by weight of the composition. In order to prevent the clogging of ink jet tip by dissolved salts in the water, deionized water is preferably used in the preparation of the ink composition.

### POLYMERIC RESIN

The ink composition of the present invention comprises a polymeric resin which serves as a binder and imparts adhesion of the colorant to the substrate. Suitable polymeric resins that can be used in the present invention include water soluble or water dispersible resins. Thus, the polymeric resin may form a true solution or a colloidal suspension that may be used if filterable without substantial separation through a filter having a pore size substantially smaller than the printer capillary tube, for example through a 1 micron filter.

Any suitable water soluble or dispersible resin that can serve as a binder can be employed. Examples of suitable water soluble or dispersible polymeric resins include acrylic resins, styrene-maleic anhydride resins, shellac based acrylic resins, polyesters, and combinations thereof.

Water soluble or dispersible acrylic resins that are suitable for use in the present invention can be made by copolymerizing an unsaturated acid monomer with other monomers such as methyl acrylate, ethyl acrylate, propyl acrylate, butyl acrylate, methyl methacrylate, ethyl methacrylate, propyl methacrylate, butyl methacrylate, hydroxyethyl acrylate, hydroxypropyl acrylate, hydroxybutyl acrylate, hydroxyethyl methacrylate, hydroxypropyl methacrylate, hydroxybutyl methacrylate, and the like, and combinations thereof. Examples of suitable unsaturated acid monomers include acrylic acid, methacrylic acid, maleic acid, fumaric acid, itaconic acid, citraconic acid, cinnamic acid, crotonic acid, styrene sulfonic acid, and the like, and combinations thereof. The unsaturated acid monomer can also be in the form of a carboxylate salt with a suitable cation including sodium, potassium, and ammonium, or in the form of an amide such as acrylamide or methacrylamide, or in the form of an anhydride, for instance, maleic anhydride.

The water soluble or dispersible acrylic resin can also include one or more of a comonomer such as styrene, α-methylstyrene, *o*, *p*, and *m*-chloromethyl styrene, styrene substituted with fluoro, chloro, bromo, iodo, nitro, or amino group, acrylonitrile, or butadiene.

There are several water soluble or dispersible acrylic resins that are commercially available that can be used in the present invention. For example, Rohm & Haas Co. in Philadelphia, Pennsylvania, sells RHOPLEX AC-261, which is an acrylic polymer emulsion. Water soluble or dispersible acrylics can also be obtained from S.C. Johnson & Co. in Racine, Wisconsin, which sells the acrylics under the tradename of JONCRYL. Preferred examples of Joncryl acrylics are the Joncryl 555, 586, 678, 680, 682, 683, and 67, which are water solubilized copolymers of styrene, alpha methylstyrene, and acrylic acid. Other preferred examples include the styrene-acrylic acid copolymers, Joncryl 538 and 138. Water soluble acrylics can also be obtained from B.F. Goodrich Co. in Akron, Ohio, with the preferred acrylic being CARBOSET 526.

Examples of suitable styrene-maleic anhydride resins include styrene-maleic anhydride copolymers. Various styrene-maleic anhydride copolymers are available commercially from Aldrich Chemical Co. in Milwaukee, Wisconsin, as SCRIPSET resins from Monsanto Co. in St. Louis, Missouri, and as SMA and SMAH resins from ATOCHEM in Malvern, Pennsylvania. Several types of SMA and SMAH resins are available. SMA 1000 is a 1:1 molar styrene-maleic anhydride copolymer having a molecular weight of Mw = 5,600 and Mn = 1,600, a Tg of 138°C, and an acid number of 480. SMA 2000 is a 2:1 molar styrene-maleic anhydride copolymer having a molecular weight of Mw = 7,700 and Mn = 1,700, a Tg of 124°C, and an acid number of 350. SMA 3000 is a 3:1 molar styrene-maleic anhydride copolymer having a molecular weight of Mw = 10,300 and Mn = 1,900, a Tg of 124°C. Ammonium salts of partial esters of styrene-maleic anhydride are available as SMAH resins having degree of esterification of 30 to 50 percent. For instance, SMA 1440H is the ammonium salt of a partial ester of 1:1 molar styrene-maleic anhydride. All of these styrene-maleic anhydride copolymers are suitable for use in the present invention. A preferred resin for use in the present invention is the SMA 17352 resin.

Shellac based acrylic resins can also used in the preparation of the jet ink composition of the present invention. Shellac is a naturally occurring resin resulting from the exudates of insects feeding on trees. Shellac has a softening point of 65°C, a melting point of 80°C, specific gravity of 1.15-1.20, an acid number of 65-75, and an iodine value of 18-20. Shellac is modified by polymerizing onto it acrylic monomers which modification improves the solubility and film forming properties of shellac. Shellac modified with acrylic monomers such as hydroxyethyl methacrylate which increase the water solubility are preferred. Acrylic modified shellac is commercially available from Zinchem, Inc., 39 Belmont Avenue, Somerset, New Jersey 08875.

The jet ink composition of the present invention can also be prepared from aqueous dispersions containing polyesters. Any suitable polyester, aromatic, aliphatic, and combinations thereof, can be used. Aromatic polyesters, for instance, can be produced so that they are dispersible in water by including polar groups such as sulfonic acid groups in the backbone of the polyesters. Such polyesters comprise, for instance, isophthalic acid, 5-sulfoisophthalic acid, terephthalic acid, and polyols such as ethylene glycol cyclohexane dimethanol, and diethylene glycol. U.S. patents 4,704,309, 4,738,785, 4,883,714, and 4,847,316 provide examples of water dispersible polyesters which can be used in the preparation of the jet ink composition of the present invention. Water dispersible polyesters can also be obtained from Cargill Chemicals Co.

The polymeric resin can be present in the jet ink composition in an amount sufficient to provide good adhesion of the ink messages to the substrates. The resin is generally present in the jet ink composition in an amount of from about 0.5 percent by weight to about 5 percent by weight of the composition, preferably in an amount of from about 1 percent by weight to about 3 percent by weight of the composition. Excessive use of the resin may increase the viscosity of the ink composition which may lead to poor printing operation and poor quality of the printed message such as smearing.

### SOLVENTS

The ink composition of the present invention can comprise one or more organic solvents to increase the solubility or the dispersibility of the resin or the colorant. It has been found that it is preferable to use a combination of two solvents. A preferred first solvent is N-methyl pyrrolidone (NMP), although other solvents can also be used. The NMP solvent can be present in an amount sufficient to dissolve or disperse the resin or the colorant. Excessive solvent is preferably avoided because of environmental concerns. A preferred amount of NMP in the inventive composition is in the range of from about 2 percent by weight to about 7 percent by weight.

It has been found that a preferred second solvent is a glycol ether. Preferred glycol ethers are the mono- and di-alkyl ethers of alkylene glycols in which the alkyl group contains 1-6 carbon atoms (e.g., methyl, ethyl, propyl, butyl, etc.) and the alkylene glycol has 2-6 carbon atoms. Monoalkyl alkylene glycol ethers are further preferred. Examples of sutiable monoalkyl alkylene glycol ethers include ethylene glycol methyl ether, ethylene glycol ethyl ether, ethylene glycol butyl ether, ethylene glycol hexyl ether, diethylene glycol methyl ether, diethylene glycol ethyl ether, diethylene glycol butyl ether, propylene glycol methyl ether, dipropylene glycol methyl ether, tripropylene glycol methyl ether, triethylene glycol ethyl ether, triethylene glycol methyl ether, and the like. Diethylene glycol monomethyl ether (Carbitol) is a further preferred second solvent. For the preferred amounts of the second solvent, see discussion below.

### PENETRANTS

One or more of the aforesaid glycol ether solvents may also act to improve the penetration of the ink composition into porous substrates such as paper and TYVEK™ (which is a polyolefin paper), resulting in improved adhesion of the image to the substrate. Dialkyl alkylene glycol ethers are further preferred as penetrants. Diethylene glycol methyl butyl ether (Butyl Carbitol) is a preferred penetrant.

The total amount of the glycol ether component employed in the ink composition of the present invention can be varied within wide limits as dictated by the viscosity consideration of the compositions. Excessive glycol ether component is to be avoided because the composition may become too viscous to be sprayed through the jet tip, and also because of environmental concerns. In general, the glycol ether component of the ink composition constitutes from about 8 percent by weight to about 17 percent by weight of the composition, the amount used varying according to the length of the carbon chain of the alkyl and alkylene groups, as known to those of ordinary skill in the art. In general, the monoalkyl alkylene glycol ether is used in smaller amounts than the dialkyl alkylene glycol ether. Thus, for instance, the monoalkyl glycol alkylene ether can be present in an amount of from about 1 percent by weight to about 5 percent by weight, and the dialkyl alkylene glycol ether in an amount of from about 7 percent by weight to about 12 percent by weight of the composition.

### HUMECTANTS

The jet ink composition of the present invention can comprise one or more humectants to prevent the ink from drying out at the jet tip. Any suitable humectant can be used. Examples of suitable humectants include aliphatic polyols such as diols, triols, and other polyhydroxy compounds. Examples of suitable polyols include alkylene glycols in which the alkylene group preferably contains 3-6 carbon atoms, as represented by propylene glycol, butylene glycol, hexylene glycol, glycerin, and the like, and combinations thereof. Propylene glycol is a further preferred humectant. Although ethylene glycol can serve as a humectant, its use should be restricted in view of its toxicity.

Other suitable examples of humectants include polyalkylene glycols such as diethylene glycol, dipropylene glycol, triethylene glycol, tripropylene glycol, tetraethylene glycol, and polyethylene glycol, and combinations thereof. Examples of suitable commercially available polyalkylene glycols include Carbowax 200 and Carbowax 400, which have average molecular weights of about 200 and 400, respectively. Polyalkylene glycols of any suitable average molecular weight can be used, and preferably those having an average molecular weight of less than 600, since higher molecular weight polyalkylene glycols frequently serve to undesirably increase the viscosity of the ink composition.

As will be appreciated by those skilled in the art, the amount of the humectant component employed will depend to some extent on the molecular weight of the polyol employed, the efficacy generally decreasing with increasing molecular weight.

Any suitable amount of the humectant can be used. The humectant is preferably used in an amount of from about 2 percent to about 7 percent by weight, and more preferably in an amount of from about 2 percent to about 4 percent by weight of the composition. Excessive amount of the humectant will unfavorably increase the viscosity of the composition.

### SURFACTANTS

The jet ink composition of the present invention can comprise one or more surfactants. The surfactant is believed to provide more than one benefit. Thus, the surfactant is believed to prevent foaming of the jet ink composition during its preparation and use. It is also believed that the surfactant, by reducing the surface tension of the ink composition, provides shorter ink drying times.

Any suitable surfactant can be used. Examples of suitable surfactants include silicones and acetylenic diols. Silicone surfactants, for example, DC-150, can be obtained from Dow Corning Co., or SILVET I-77, 720, 722, or 7002 can be obtained from Union Carbide Co. The SURFYNOL brand acetylenic surfactants can be obtained from Air Products and Chemical Co. A number of Surfynol surfactants are available, including Surfynol 104 (2,4,7,9-tetramethyl-5-decyn-4,7-diol), which is available as a solution in a variety of solvents as Surfynol 104A, Surfynol 104E, Surfynol 104H, and Surfynol 104BC, and other Surfynols such as Surfynol GA, Surfynol SE, Surfynol TG, Surfynol PC, the dimethyl hexynediol, Surfynol 61, the dimethyl octynediol, Surfynol 82, the ethoxylated derivatives of the tetramethyl decynediol, Surfynol 440, Surfynol 465, and Surfynol 485, all of which can be used in the present invention, the preferred surfactant being Surfynol 104PG50, which is a 50% solution of 2,4,7,9-tetramethyl-5-decyn-4,7-diol in propylene glycol.

Any suitable amount of the surfactant can be used. The surfactant can be present in the jet ink composition of the present invention in an amount effective to prevent foaming of the jet ink during use and to shorten ink drying times. Further, the surfactant is used preferably in an amount sufficient to obtain a surface tension of below 35 dynes/cm for the ink composition, preferably in the range of about 24-34 dynes/cm. The amount of surfactant used can be in the range of from about 0.1 percent by weight to about 1 percent by weight, preferably in the range of from about 0.25 percent by weight to about 0.35 percent by weight of the composition. Excessive use of the surfactant is preferably avoided because excessive use may adversely affect print quality. The weight percentages given above refer to that of the active ingredient, and if the surfactant is sold in a diluted form, the amounts will be proportionately increased.

### BIOCIDES

The jet ink composition of the present invention can comprise one or more biocides to prevent the growth of bacteria, mould, or fungus. Methyl p-hydroxybenzoate (Methyl Paraben) and 6-acetoxy-2,2-dimethyl-1,3-dioxane (available as Giv Gard DXN from Givaudam Corp.) are suitable biocides, with the latter being a preferred biocide.

Any suitable amount of the biocide can be used. The biocide is generally present in the jet ink composition of the present invention in an amount sufficient to prevent the attack by bacteria, mould, and fungus. The biocide is generally present in an amount of from about 0.05 percent by weight to about 0.5 percent by weight of the composition, and preferably in an amount of from about 0.1 percent by weight to about 0.2 percent by weight of the jet ink composition.

### COLORANTS

The ink composition comprises one or more colorants that impart the desired color to the printed message. Any dye or pigment that may be dissolved or dispersed in the ink composition can be used, and for preparing bar code readable compositions, a dye or pigment that has infrared absorption in the range of 700 nm to 1100 nm can be used. Examples of preferred colorants include water or oil soluble nigrosine dyes, and carbon black. Carbon black is commercially available in a pigment dispersion as Black Acroverse Dispersion #32B32D from Penn Color. Examples of other colorants that may be used in the jet ink of the present invention are set forth in, for instance, U.S. Patent 5,254,158 and UK Patent Application GB 2 105 735.

Examples of other colorants suitable for use in the preparation of the ink composition of the present invention include, but are not limited to, the yellow dyes such as C.I. Solvent Yellow 19 (C.I. 13900A), C.I. Solvent Yellow 21 (C.I. 18690), C.I. Solvent Yellow 61, C.I. Solvent Yellow 80, FD&C Yellow #5, Yellow Shade 16948, Acid Yellow 23, Levaderm Lemon Yellow (Mobay), Spirit Fast Yellow 3G, Aizen Spilon Yellow C-GNH (Hodagaya Chemical Co.), Pergasol Yellow CGP (Ciba-Geigy), and the like, the orange dyes such as C.I. Solvent Orange 1 (C.I. 11920), C.I. Orange 37, C.I. Orange 40, Diaresin Orange K (Mitsubishi Chemical Industries, Ltd.), Diaresin Orange G (Mitsubishi Chemical Industries, Ltd.), Sumiplast Orange 3G (Sumitomo Chemical Co., Ltd.), and the like, red dyes such as C.I. Solvent Red 8, C.I. Solvent Red 81, C.I. Solvent Red 82, C.I. Solvent Red 84, C.I. Solvent Red 100, Cibacron Brilliant Red 38-A (Aldrich Chemical Co.), Drimarene Brilliant Red E-6A (Pylam, Inc.), Acid Red 92, Reactive red 31 (ICI America), and the like, pink dyes such as Diaresin Pink M (Mitsubishi Chemical Industries, Ltd.), Sumiplast Pink RFF (Sumitomo Chemical Co.), Direct Brill Pink B Ground Crude (Crompton & Knowles), and the like, violet dyes such as C.I. Solvent Violet 8, C.I. Solvent Violet 21, Diaresin Violet (Mitsubishi), Diaresin Violet D, Sumiplast Violet RR (Sumitomo), and the like, blue dyes such as C.I. Solvent Blue 2, C.I. Solvent Blue 11, C.I. Solvent Blue 25, C.I. Solvent Blue 36, C.I. Solvent Blue 55, and the like, green dyes such as C.I. Solvent Green 3 and the like, brown dyes such as C.I. Solvent Brown 3 and Diaresin Brown A (Mitsubishi), and the like, black dyes such as C.I. Solvent Black 3, C.I. Solvent Black 5, C.I. Solvent Black 7, C.I. Solvent Black 22, C.I. Solvent Black 27, C.I. Solvent Black 29, Acid Black 123, and the like.

Any suitable amount of the colorant can be used. The colorant is generally present in the ink composition in an amount required to produce the desired contrast and readability. The colorant is preferably present in an amount of from about 1 percent to about 10 percent by weight, more preferably in an amount of from about 2 percent to about 8 percent by weight, and even more preferably in an amount of from about 2 percent to about 5 percent by weight of the composition.

Although the total amount of the infrared absorbing colorant preferably constitutes from about 1 to about 10 percent by weight of the ink composition, when use is made of water-dispersed carbon black as all or part of the infrared absorbing colorant, it is generally desirable to maintain the carbon black content of the composition below about 1 percent by weight of the composition since greater contents tend to increase the ink viscosity and introduce the possibility of nozzle plugging. When using a combination of carbon black and a soluble and/or solubilized dye, it has been found that good results are obtained when the composition contains about 0.1 to about 0.75 percent by weight carbon black and about 1 to about 3 percent by weight of a soluble and/or solubilized dye. When use is made of a soluble and/or solubilized dye or dyes alone without carbon black, the amount of dye preferably employed is about 2 to about 5 percent by weight of the composition.

### CONDUCTIVITY

Jet printing ink compositions, for best results, should have a low specific resistivity, such as within the range of 50 to 2000 ohm-cm. Normally, the infrared absorbing materials employed in the practice of the present invention contain sufficient quantities of ionizable impurities to impart the desired conductivity to the aqueous composition. For example, the high infrared absorbing dyes or pigments, such as nigrosine or carbon black, generally contain ionizable inorganic salt, such as a Glauber salt or sodium chloride which has been added during manufacture of the dye to standardize the dye or pigment lot. If use is made of a pure infrared absorbing component containing no ionizable material, the desired conductivity can be achieved by the addition of an ionizable material, such as an ionizable salt including dimethylamine hydrochloride, and hydroxylamine hydrochloride. Normally, an ionizable salt content of up to 2 percent provides the desired conductivity.

### VISCOSITY

It is essential to the practice of the present invention that the ink compositions have a viscosity within the range of about 1.0 to about 10 centipoise, and preferably about 1.0 to about 5.0 centipoise, as measured at 25°C, in order to achieve the desired rheological characteristics. As indicated above, the viscosity of the ink composition of the invention is conveniently regulated, as known to those of ordinary skill in the art, for instance, by varying the quantity and the molecular weight of the polymeric resins, the solvents, the penetrants, and the humectants.

### pH ADJUSTING AGENTS

It is preferable to include a pH adjusting agent such as a base in the ink composition to insure that the polymeric resin remains soluble or dispersible in the aqueous carrier. For this purpose, it is desirable to maintain the pH of the ink at about 7.0 to about 10.5, preferably in the range of about 7.0 to about 10.0. The desired pH will be dependent upon the particular resin, and as known to those of ordinary skill in the art, to some extent upon the other components employed. Although use can be made of inorganic bases such as sodium hydroxide and potassium hydroxide, their presence in the printed message leads to poor water resistance after drying. It is preferred to make use of an organic base which can be eliminated by evaporation. Best use is made of a pH adjusting agent that evaporates rapidly to accelerate development of water resistance upon aging. Thus, while use can be made of organic amines, it is preferable to make use of ammonium hydroxide for controlling the pH within the desired range. Morpholine can also be used for long term stability during storage of the ink composition.

Any suitable amount of the pH adjusting agent can be used. Generally, the pH adjusting agent is used in an amount of from about 0.1 percent by weight to about 1 percent by weight, and preferably in an amount of from about 0.3 percent by weight to about 0.7 percent by weight of the composition. Excessive use of the agent may adversely affect the print quality, and also raise environmental concerns.

The jet ink composition of the present invention can be used to print messages on any suitable substrate, including porous substrates such as plain papers including Xerox® paper, notebook paper, bond paper, silica coated papers, and the like, glossy paper, transparency materials, fabrics, textile products, plastics, polymeric films, Tyvek® envelopes, corrugated cardboard, and wood and wood products, and on non-porous substrates such as bare tin plate, aluminum, polymer coated tin or aluminum cans or plate, tin-free steel, or glass.

All percentages expressed herein are percentages by weight, based on the total weight of the ink composition of the present invention, unless otherwise indicated.

The following examples further illustrate the present invention but, of course, should not be construed as in any way limiting its scope.

### EXAMPLE 1

This Example illustrates the preparation of the inventive jet ink composition as well as the advantages of the inventive jet ink composition over certain previously known inks.

An embodiment of the inventive jet ink composition was prepared by combining the ingredients set forth in Table 1 and mixing them by continuous stirring until a homogeneous solution was obtained.

**Table 1.**

| Ingredients Used To Prepare A Jet Ink Composition of the Present Invention : | | |
|---|---|---|
| MATERIALS | VENDORS | % by Weight |
| Deionized Water | - | 62.45 |
| *15% Styrene Maleic Anhydride Solution | Atochem | 13.35 |
| N-Methyl Pyrrolidone (1-methyl 2-pyrrolidinone) | ISP Technology | 4.00 |
| Carbitol | Ashland Chemicals | 2.00 |
| Propylene Glycol | Ashland Chemicals | 3.00 |
| Butyl Carbitol | Union Carbide | 10.00 |
| Giv Card DXN | Givaudam Corp. | 0.10 |
| 50% Surfynol 104 PG50 | Air Products | 0.60 |
| Ammonium Hydroxide | Kobay Reslab | 0.50 |
| Nigrosine WSB crystals | International Dye Stuff | 4.00 |

| | | |
|---|---|---|
| * (SMA 17352 resin: 2.00 gms, H₂O: 10.55 gms, NH₄OH: 0.8 gms). | | |

The above composition was jet printed onto various types of paper and was found to work satisfactorily.

The embodiment set forth in Example 1 offers several advantages over previously known ink compositions, for instance, the "16-5000 ink", whose composition is set forth below. Unlike the 16-5000 ink, the present inventive ink composition is free of ethylene glycol, which is a teratogen and a mutagen, and of triethanolamine, which is a possible carcinogen.

The 16-5000 ink was prepared by combining and mixing the ingredients set forth in Table 2.

**Table 2.**

| Composition of the 16-5000 Ink: | |
|---|---|
| | Wt. Percent |
| Ethylene glycol | 7.00 |
| Triethanolamine | 0.25 |
| Nigrosine WSB Crystals | 4.00 |
| Carbitol | 3.00 |
| Water | 85.75 |

It has been further discovered that the jet ink composition of the present invention can also be manufactured more rapidly than the 16-5000 ink composition. For instance, a 200 gallon batch of 16-5000 ink takes 36 hours of manufacturing time whereas a batch of the same size of the ink of the present invention can be manufactured in 6 hours. It is believed that the styrene-maleic anhydride resin present in the composition promotes rapid dissolution of the various ingredients and at least partially accounts for the reduced manufacturing time.

The jet ink composition of the present invention also has greater adhesion to glossy and non-porous substrates than the 16-5000 ink. The greater adhesion is provided by the styrene-maleic anhydride resin. It has been found that the jet ink composition of the present invention has greater rub resistance than the 16-5000 ink, when rub test is done 10 times with a thumb used to apply medium pressure.

The jet ink composition of the present invention also has greater water resistance than the 16-5000 ink. It has been found that the printed image of the 16-5000 ink loses its intensity when exposed to water whereas the printed image from the inventive ink composition retains the intensity when exposed to water. The styrene-maleic anhydride resin is believed to provide the water resistance.

### EXAMPLE 2

This Example illustrates that the drying times of the inventive ink composition are shorter than that of previously known jet inks.

Drying times of the inventive ink composition prepared as in Example 1 were compared against those of the 16-5000 ink by applying drops of identical size to various substrates. The ink drying time was measured according to the following method. The ink was applied on the specified substrate with an EXCEL 100 printer at 70° F and 90% relative humidity. Immediately after the application of the ink, the resistance of the image to light finger rubs was measured using a stop watch. The drop size of the inks was measured using a microscope with appropriate magnification scale.

Table 3 sets forth the drop sizes and the drying times of the drops placed on the various substrates. It is clear that the drying times of comparably sized drops of the present inventive ink composition are shorter than that of the 16-5000 ink.

**Table 3.**

| Comparison of Drop Size and Drying Times** | | |
|---|---|---|
| SUBSTRATES | DRYING TIME (Sec) 16-5000 vs. Ink of Example 1 | DROP SIZE (mils) 16-5000 vs. Ink of Example 1 |
| A.B. Dick Bond | 4/1 | 16/16 |
| Tyvek | 8/1 | NM*/22 |
| VIDEOJET™ Card Glossy | 64/25 | 14/14 |
| VIDEOJET Card Flat | 9/1 | 14/14 |
| White Wove Sub 24 | 3/1 | 16/16 |

| | | |
|---|---|---|
| * Not measurable due to excessive spreading. | | |
| ** Test Method B: (LIWS101) using Excel 100 printer; conditions: 70°F, 90% RH. | | |

### EXAMPLE 3

This Example further illustrates that the drying times of the inventive ink composition are shorter than that of the previously known jet inks.

The ink drying times were measured by another method using a microliter syringe. The drying time of the ink was determined by measuring the time required for a drop of the ink to penetrate and dry on specific substrate at 70° F and 90% relative humidity.

Table 4 sets forth the drying times for the drops of the 16-5000 ink and that of the present inventive ink composition. Again, it is clear that the present inventive ink composition has shorter drying times than the 16-5000 composition.

**Table 4.**

| Comparison of Drying Times** | |
|---|---|
| SUBSTRATES | DRYING TIME (sec) 16-5000 vs. Ink of Example 1 |
| A.B. Dick Bond | 14/1 |
| Tyvek | 20/1 |
| VIDEOJET Card Glossy | 120/40 |
| VIDEOJET Card Flat | 40/1 |
| White Wove Sub 24 | 11/1 |

| | |
|---|---|
| ** Test Method C: (LTWD101) using a microliter syringe; conditions: 70°F, 90%RH. | |

### EXAMPLE 4

This Example illustrates that the surface tension of the ink composition of the present invention is lower than that of the ink composition taught by U.S. Patent 3,705,043.

An ink composition was prepared following the procedure set forth in Example 3 of the '043 patent. The ingredients are set forth in Table 5.

**Table 5.**

| An Ink Composition of the '043 Patent: | |
|---|---|
| | Wt. Percent |
| Water-soluble nigrosine dye (Acid Black 2) | 2.5 |
| N-methylpyrrolidone | 5.0 |
| Methyl ether of diethylene glycol | 5.0 |
| Ethoxytriglycol | 10.0 |
| Water | 77.5 |

The above '043 ink had a surface tension of 51.2 dynes/cm. The ink was printed on the substrate with an EXCEL 100 printer at 70° F and 68% relative humidity. Immediately after printing, the resistance of the image to light finger rubs was measured using a stop watch. The ink drying times on the porous substrates were as follows: White Wove Sub 24 paper, 1 second; photocopying bond paper, 6 seconds; and VIDEOJET™ card flat, 5 seconds. The drying time on a glossy paper was 11 seconds. The ink of the present invention had a drying time of less than 1 second on the aforesaid porous substrates, and 15-20 seconds on glossy paper. Thus, it is clear that the inventive ink composition has a drying time less than that of the '047 ink on porous substrates.

Further, the embodiment of the inventive ink composition set forth in Example 1 had a surface tension of 28 dynes/cm. Surface tension data set forth in this application were obtained following the ASTM method D-3825-9, namely, the standard test method for measuring dynamic surface tension by the fast bubble technique, on a SENSADYNE 5000 - Surface Tensiometer, available from Chemdyne Research Corp. in Mesa, Arizona.

### EXAMPLE 5

This Example illustrates that the surface tension of the ink composition of the present invention is lower than that of the ink composition taught by U.S. Patent 3,687,887. The '887 patent states that the ink compositions have a surface tension within the range of 35-40 dynes/cm (column 4, lines 5-7).

An ink composition was prepared following the procedure set forth in the working example 3 of the '887 patent. The ingredients are set forth in Table 6.

**Table 6.**

| An Ink Composition of the '887 Patent: | |
|---|---|
| | Wt. Percent |
| SMA 1725 | 1.0 |
| Acrylic Resin (CDx67-3- S.C. Johnson & Sons, Inc.) | 1.0 |
| Methyl carbitol | 8.0 |
| Butyl carbitol | 4.0 |
| Direct Black 38 | 2.0 |
| Acid Black 1 | 0.5 |
| Acid Yellow 23 | 0.75 |
| Acid Red 73 | 0.75 |
| Dioxin | 0.1 |
| Morpholine | 0.5 |
| N-methyl pyrrolidone | 1.0 |
| Water | 80.4 |

The above '887 ink had a surface tension of 36.2 dynes/cm. The compositions of the working examples 2 and 4 in the '887 patent, which share many common ingredients with the working example 3, are also expected to possess a surface tension of about 36 dynes/cm.

The ink of working example 3 was printed on substrate with an EXCEL 100 printer at 70° F and 68% relative humidity. The resistance of the image to light finger rubs was measured using a stop watch. The ink drying times on the porous substrates were as follows: White Wove Sub 24 paper, 1 second; photocopying bond paper, 6 seconds; and VIDEOJET™ card flat, 5 seconds. The drying time on a glossy paper was 13 seconds. The inventive ink had a drying time of less than 1 second on porous paper, and 15-20 seconds on glossy paper. Thus, it is clear that the inventive ink composition has a surface tension less than that of the '887 ink. It is also clear that the inventive ink composition has a drying time on porous substrates less than that of the '887 ink.

The present invention further provides a jet ink composition as described above, wherein the styrene-maleic anhydride resin is present in an amount of from about 1 percent by weight to about 3 percent by weight of the composition, the solvent is present in an amount of from about 2 percent by weight to about 7 percent by weight by weight of the composition, the monoalkyl alkylene glycol ether is present in an amount of from about 1 percent by weight to about 5 percent by weight by weight of the composition, the dialkyl alkylene glycol ether is present in an amount of from about 7 percent by weight to about 12 percent by weight by weight of the composition, the humectant is present in an amount of from about 2 percent by weight to about 4 percent by weight of the composition, the surfactant is present in an amount of from about 0.25 percent by weight to about 0.35 percent by weight of the composition, the biocide is present in an amount of from about 0.1 percent by weight to about 0.2 percent by weight of the composition, the colorant is present in an amount of from about 2 percent by weight to about 8 percent by weight of the composition, and the base is present in an amount of from about 0.3 percent by weight to about 0.7 percent by weight of the composition.

The present invention further provides an improved method of jet printing on porous and non-porous surfaces, the improvement comprising using the jet ink compositions of the present invention.

## Claims

1. A jet ink composition comprising water, a water soluble or dispersible polymeric resin, a colorant having infrared absorption in the range of 700 - 1100 nm, an alkylene glycol having 3-6 carbon atoms, and at least one mono- or di-alkyl ether of an alkylene glycol having 2-6 carbon atoms wherein said alkyl group consists of 1-6 carbon atoms, said ink composition having a surface tension of less than 35 dynes/cm.

2. A jet ink composition as claimed in claim 1, wherein said composition has (1) a viscosity from 1.6 to 7.0 centipoises at 25° C; (2) an electrical resistivity from 50 to 2000 ohm-cm; and (3) a sonic velocity from 1200 to 1300 meters/second.

3. A jet ink composition as claimed in claim 1 or 2, wherein said composition has a surface tension of from 24 dynes/cm to 34 dynes/cm.

4. A jet ink composition as claimed in any one of claims 1 to 3, wherein said water soluble or dispersible polymeric resin is selected from the group consisting of a styrene-maleic anhydride resin, an acrylic resin, a shellac based acrylic resin, a polyester resin, and combinations thereof.

5. A jet ink composition as claimed in claim 4, wherein said polymeric resin is a styrene-maleic anhydride resin having a styrene:maleic anhydride molar ratio of about 1 to 1.

6. A jet ink composition as claimed in claim 5, wherein said polymeric resin is a partial ester of styrene-maleic anhydride having a degree of esterification in the range of from 30 percent to 50 percent.

7. A jet ink composition as claimed in any one of the preceding claims, wherein said polymeric resin is present in said composition in an amount of from 1 percent by weight to 3 percent by weight.

8. A jet ink composition as claimed in any one of the preceding claims, wherein said colorant is selected from the group consisting of nigrosine and carbon black.

9. A jet ink composition as claimed in claim 8, wherein said nigrosine is water soluble nigrosine crystals.

10. A jet ink composition as claimed in claim 9, wherein said nigrosine is present in an amount of from 3 percent by weight to 6 percent by weight of said composition.

11. A jet ink composition as claimed in any one of the preceding claims, wherein said alkylene glycol is propylene glycol.

12. A jet ink composition as claimed in any one of the preceding claims, wherein said alkylene glycol is present in an amount of from 2 percent by weight to 7 percent by weight of said composition.

13. A jet ink composition as claimed in any one of the preceding claims, wherein said alkylene glycol monoalkyl ether is diethylene glycol monomethyl ether.

14. A jet ink composition as claimed in claim 13, wherein said diethylene glycol monomethyl ether is present in an amount of from 1 percent by weight to 5 percent by weight of said composition.

15. A jet ink composition as claimed in any one of the preceding claims, wherein said alkylene glycol dialkyl ether is diethylene glycol butyl methyl ether.

16. A jet ink composition as claimed in claim 15, wherein said diethylene glycol butyl methyl ether is present in an amount of from 7 percent by weight to 12 percent by weight of said composition.

17. A jet ink composition as claimed in any one of the preceding claims, wherein said composition further comprises N-methyl pyrrolidone.

18. A jet ink composition as claimed in claim 17, wherein said N-methyl pyrrolidone is present in an amount of from 2 percent by weight to 7 percent by weight of said composition.

19. A jet ink composition as claimed in any one of the preceding claims, further comprising a surfactant.

20. A jet ink composition as claimed in claim 19, wherein said surfactant is 2,4,7,9-tetramethyl-5-decyn-4,7-diol.

21. A jet ink composition as claimed in claim 19 or 20, wherein said surfactant is present in an amount of from 0.25 percent by weight to 0.35 percent by weight of said composition.

22. A jet ink composition as claimed in any one of the preceding claims, further comprising a biocide.

23. A jet ink composition as claimed in claim 22, wherein said biocide is 6-acetoxy-2,2-dimethyl-1,3-dioxane.

24. A jet ink composition as claimed in claim 22 or 23, wherein said biocide is present in an amount of from 0.1 percent by weight to 0.2 percent by weight of said composition.

25. A jet ink composition as claimed in any one of the preceding claims, further comprising a base.

26. A jet ink composition as claimed in claim 25, wherein said base is ammonium hydroxide.

27. A jet ink composition as claimed in claim 26, wherein said ammonium hydroxide is present in an amount of from 0.3 percent by weight to 0.7 percent by weight of said composition.

28. A jet ink composition as claimed in any one of claims 1, 4, 17, 19, 22 and 26, wherein said styrene-maleic anhydride resin is present in an amount of from 1 percent by weight to 3 percent by weight of said composition, said N-methyl pyrrolidone is present in an amount of from 2 percent by weight to 7 percent by weight by weight of said composition, said monoalkyl alkylene glycol ether is present in an amount of from 1 percent by weight to 5 percent by weight by weight of said composition, said dialkyl alkylene glycol ether is present in an amount of from 7 percent by weight to 12 percent by weight by weight of said composition, said alkylene glycol is present in an amount of from 2 percent by weight to 4 percent by weight of said composition, said surfactant is present in an amount of from 0.25 percent by weight to 0.35 percent by weight of said composition, said biocide is present in an amount of from 0.1 percent by weight to 0.2 percent by weight of said composition, said colorant is present in an amount of from 2 percent by weight to 8 percent by weight of said composition, and said ammonium hydroxide is present in an amount of from 0.3 percent by weight to 0.7 percent by weight of said composition.

29. A method of jet printing on porous and non-porous surfaces, which comprises using a jet ink composition as claimed in any one of the preceding claims.
